# EUROPEAN PATENT SPECIFICATION

(11) **EP 3 089 344 B1**
(45) Date of publication and mention of the grant of the patent: **24.10.2018**
(21) Application number: 14874681.1
(22) Date of filing: 05.06.2014
(51) Int. Cl.: H02M 7/48, H02M 7/49

(54) **POWER CONVERSION DEVICE**
STROMWANDLERVORRICHTUNG
DISPOSITIF DE CONVERSION DE PUISSANCE

(30) Priority: 24.12.2013 JP 2013264872
(43) Date of publication of application: 02.11.2016
(73) Proprietor: Mitsubishi Electric Corporation, Tokyo 100-8310 (JP)
(72) Inventor: JIMICHI, Takushi, Tokyo 100-8310 (JP); KOYANAGI, Kimiyuki, Tokyo 100-8310 (JP)
(74) Representative: Parker, Andrew James
(86) International application number: PCT/JP2014/064996
(87) International publication number: WO 2015/098146

(56) References cited:
- EP-A1- 2 768 133
- EP-A1- 2 999 103
- WO-A1-2011/012174
- WO-A1-2012/010055
- WO-A1-2012/103936
- WO-A1-2013/068048
- WO-A2-2012/143037
- JP-A- S57 101 573
- JP-A- 2013 534 803

## Description

### TECHNICAL FIELD

The present invention relates to a power conversion device for converting AC power to DC power or converting DC power to AC power.

### BACKGROUND ART

In power conversion devices for high-voltage application, multilevel converters are put into practical use.

A multilevel converter is disclosed which has a circuit configuration in which a plurality of half-bridge converter cells are connected in series between AC terminals U, V, W and DC terminals P and N, and AC voltage and DC voltage are respectively generated at the AC terminals and the DC terminals through ON/OFF control of semiconductor switching elements in the converter cells (for example, Non-Patent Document 1).

A multilevel circuit is disclosed in which each converter cell has semiconductor switching elements in a full-bridge configuration for the purpose of suppressing short-circuit current caused when DC terminals P and N are short-circuited (for example, Patent Document 1).

### CITATION LIST

### PATENT DOCUMENT

Patent Document 1: International Publication No. 2011/012174 (pages 20, 21; FIG. 5)

### NON-PATENT DOCUMENT

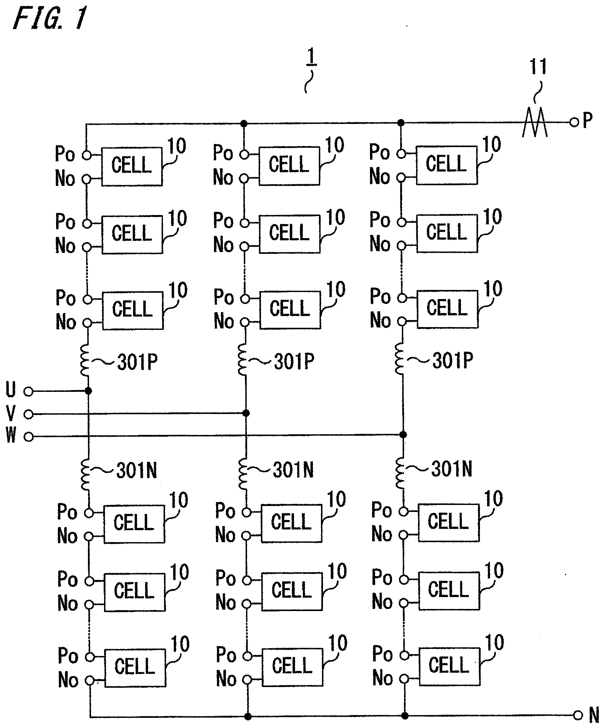

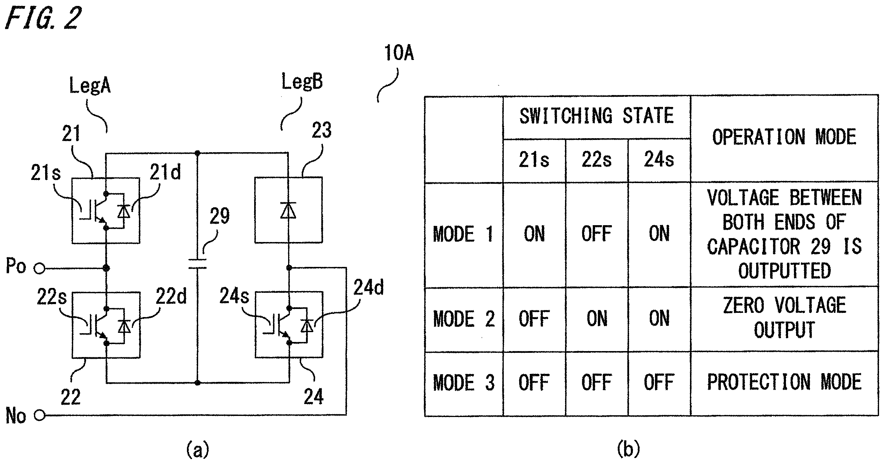

Non-Patent Document 1: Makoto Hagiwara, Hirofumi Akagi, "PWM Control and Experiment of Modular Multilevel Converters (MMC)", IEEJ transactions D, vol. 128, no. 7, pp. 957-965, 2008 (page 958, FIGS. 1, 2)

### SUMMARY OF THE INVENTION

### PROBLEMS TO BE SOLVED BY THE INVENTION

The circuit disclosed in Non-Patent Document 1 is sufficient for normal operation in which AC voltage is converted to DC voltage or DC voltage is converted to AC voltage. However, in the case of suppressing short-circuit current upon a DC short-circuit accident, it is necessary to use a full-bridge circuit of semiconductor switching elements disclosed in Patent Document 1. In this case, the number of semiconductor switching elements increases, leading to a problem of increasing the size and the cost of the power conversion device.

The present invention has been made to solve the above problem, and an object of the present invention is to provide a power conversion device with a small size and low cost, which enables suppression of short-circuit current when DC terminals are short-circuited.

### SOLUTION TO THE PROBLEMS

A power conversion device according to the present invention includes phase arms provided between AC terminals and DC terminals and each having one converter cell or two or more converter cells connected in series, each converter cell including an energy accumulating element and upper and lower arms having semiconductor switching elements, wherein at least one of the converter cells is a first converter cell in which an energy accumulating element, a first leg, and a second leg are connected in parallel, the first leg having upper and lower arms both having semiconductor switching elements, the second leg having upper and lower arms one of which has only a diode as a semiconductor element through which main current flows, and the other one of which has a semiconductor switching element, as for example in EP-A-2768133 (prior art under Article 54(3) EPC).

### EFFECT OF THE INVENTION

In the power conversion device according to the present invention, at least one of the converter cells composing the phase arms between the AC terminals and the DC terminals has the first leg and the second leg connected in parallel, the first leg having upper and lower arms both having semiconductor switching elements, the second leg having upper and lower arms one of which has only a diode as a semiconductor element through which main current flows and the other one of which has a semiconductor switching element. Thus, overcurrent caused by short-circuit between the DC terminals can be suppressed, and size reduction and cost reduction of the device can be achieved.

### BRIEF DESCRIPTION OF THE DRAWINGS

[FIG. 1] FIG. 1 is a main circuit configuration diagram of a power conversion device according to embodiment 1 of the present invention.
[FIG. 2] FIG. 2 is a circuit diagram and an operation explanation diagram of a first converter cell in the power conversion device according to embodiment 1 of the present invention.
[FIG. 3] FIG. 3 is a circuit diagram and an operation explanation diagram of the first converter cell in the power conversion device according to embodiment 1 of the present invention.
[FIG. 4] FIG. 4 is a circuit diagram and an operation explanation diagram of a second converter cell in the power conversion device according to embodiment 1 of the present invention.
[FIG. 5] FIG. 5 is an explanation diagram of a short-circuit current route when DC terminals are short-circuited in the power conversion device according to embodiment 1 of the present invention.
[FIG. 6] FIG. 6 is an explanation diagram of a short-circuit current route in the second converter cell in the power conversion device according to embodiment 1 of the present invention.
[FIG. 7] FIG. 7 is an explanation diagram of a short-circuit current route in the first converter cell in the power conversion device according to embodiment 1 of the present invention.
[FIG. 8] FIG. 8 is an operation flowchart of control means in the power conversion device according to embodiment 1 of the present invention.
[FIG. 9] FIG. 9 is a main circuit configuration diagram of another example of the power conversion device according to embodiment 1 of the present invention.
[FIG. 10] FIG. 10 is a main circuit configuration diagram of another example of the power conversion device according to embodiment 1 of the present invention.
[FIG. 11] FIG. 11 is a main circuit configuration diagram of another example of the power conversion device according to embodiment 1 of the present invention.
[FIG. 12] FIG. 12 is another circuit diagram of a first converter cell in a power conversion device according to embodiment 2 of the present invention.
[FIG. 13] FIG. 13 is another circuit diagram of the first converter cell in the power conversion device according to embodiment 2 of the present invention.
[FIG. 14] FIG. 14 is another circuit diagram of the first converter cell in the power conversion device according to embodiment 2 of the present invention.
[FIG. 15] FIG. 15 is another circuit diagram of the first converter cell in the power conversion device according to embodiment 2 of the present invention.
[FIG. 16] FIG. 16 is a main circuit configuration diagram of a power conversion device according to embodiment 3 of the present invention.
[FIG. 17] FIG. 17 is a main circuit configuration diagram of another example of the power conversion device according to embodiment 3 of the present invention.
[FIG. 18] FIG. 18 is a main circuit configuration diagram of another example of the power conversion device according to embodiment 3 of the present invention.

### DESCRIPTION OF EMBODIMENTS

### Embodiment 1

Embodiment 1 relates to a power conversion device having phase arms each having a plurality of converter cells connected in series, between AC terminals and DC terminals, each converter cell being a first converter cell composed of: an energy accumulating element; a first leg having upper and lower arms both having semiconductor switching elements; and a second leg having upper and lower arms one of which has a diode and the other one of which has a semiconductor switching element.

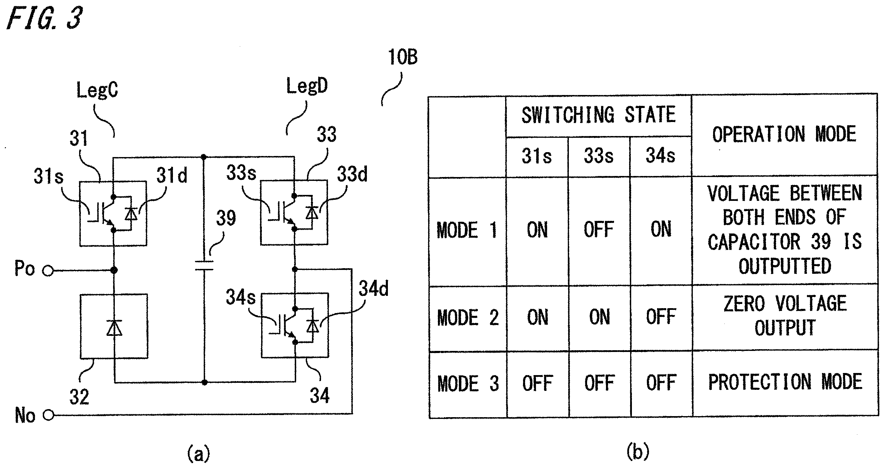

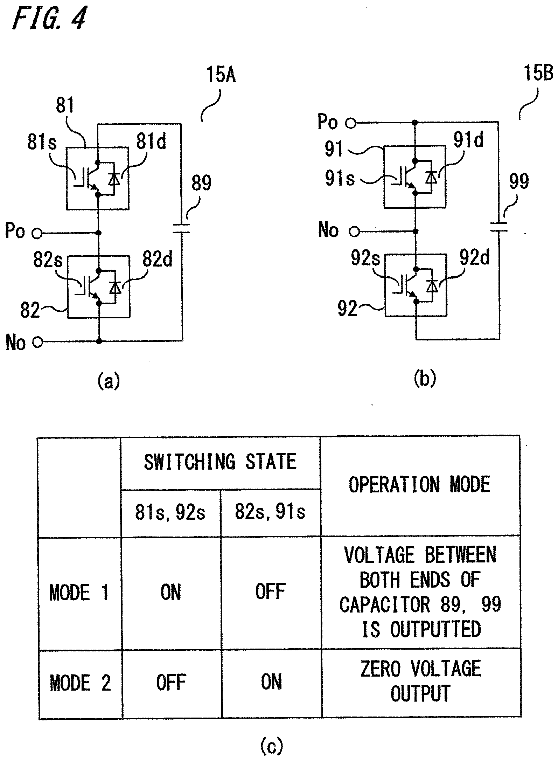

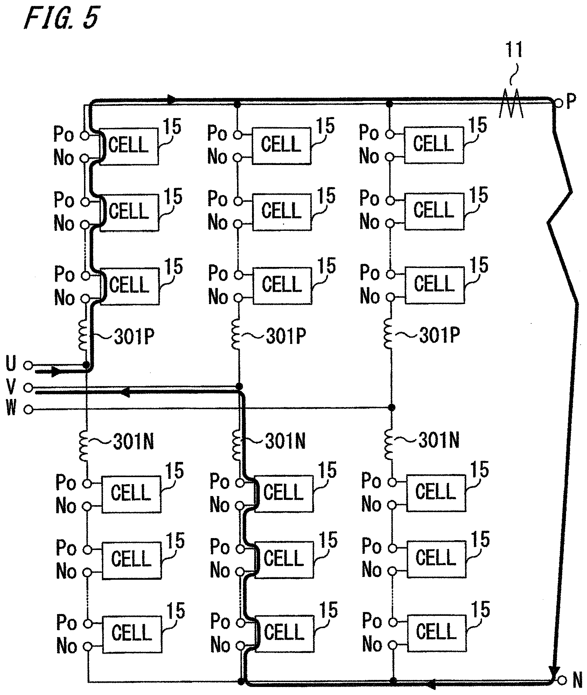

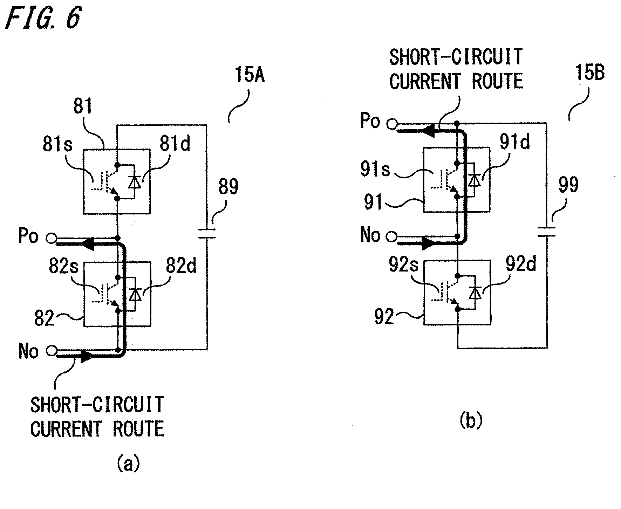

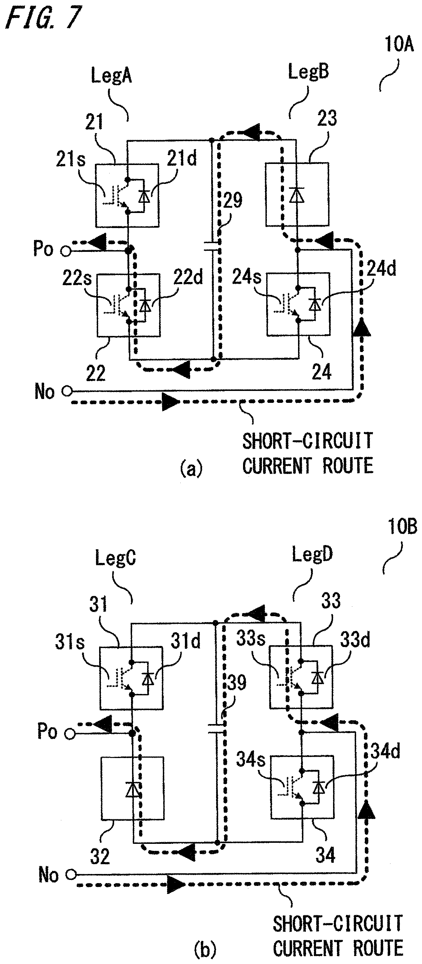

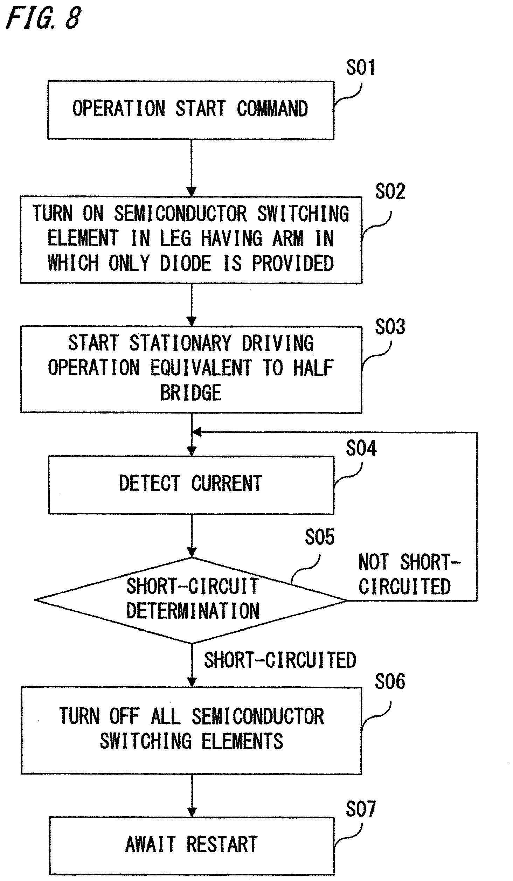

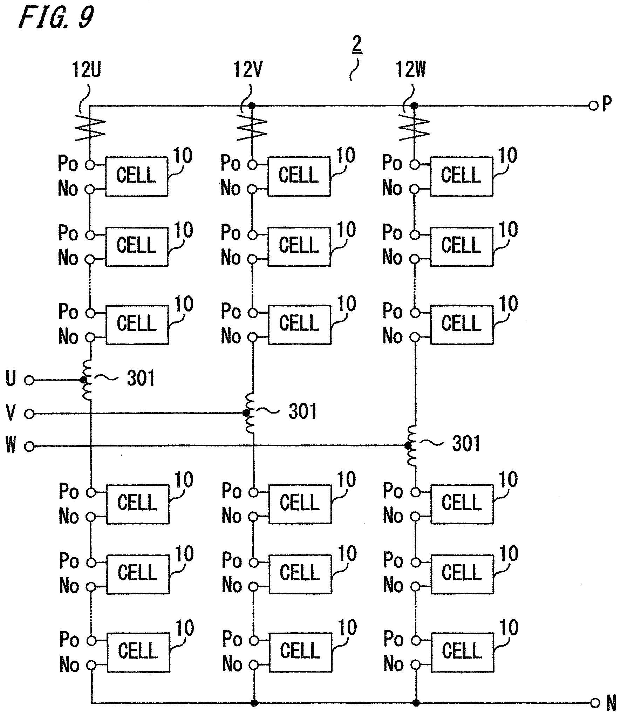

Hereinafter, the configuration and operation of the power conversion device 1 according to embodiment 1 of the present invention will be described on the basis of: FIG. 1 which is a main circuit configuration diagram of the power conversion device; FIG. 2 and FIG. 3 which are circuit diagrams and operation explanation diagrams of the first converter cell; FIG. 4 which is a circuit diagram and an operation explanation diagram of a second converter cell; FIG. 5 which is an explanation diagram of a short-circuit current route when the DC terminals are short-circuited; FIG. 6 which is an explanation diagram of a short-circuit current route in the second converter cell; FIG. 7 which is an explanation diagram of a short-circuit current route in the first converter cell; FIG. 8 which is an operation flowchart of control means; and FIG. 9 to FIG. 11 which are main circuit configuration diagrams of other examples.

FIG. 1 is a main circuit configuration diagram of the power conversion device 1 according to embodiment 1 of the present invention.

The power conversion device 1 in FIG. 1 has AC terminals U, V, W and DC terminals P and N, and has a converter cell series unit having one or more (1 to n) first converter cells 10 connected in series in each phase arm between the AC terminals U, V, W and the DC terminals P and N. Reactors 301P and 301N are provided between each of the AC terminals U, V, W and each of the DC terminals P and N.

A current detector 11 as current detection means for detecting short-circuit current is provided on the DC terminal P side. The current detector as current detection means for detecting short-circuit current may be provided at the AC terminals U, V, W. An example in which the current detector is provided at the AC terminals U, V, W is shown in FIG. 9 as described later.

In each phase arm between the AC terminals U, V, W and the DC terminals P and N, a converter cell series unit having a plurality of first converter cells 10 connected in series may be provided, or one first converter cell 10 may be provided. This is simply described as, "a converter cell series unit having one or more (1 to n) first converter cells 10 connected in series is provided". This may also be described as, "a phase arm having one first converter cell 10 or two or more first converter cells 10 connected in series ...".

In the drawings (for example, FIGS. 1, 5), each converter cell is denoted by a character "CELL".

It is noted that the reactors 301P and 301N may not necessarily be reactors, and may be replaced with elements having inductance components (for example, a cable intentionally elongated) as described later.

Next, the configuration and operation of the first converter cell 10 will be described on the basis of FIG. 2 and FIG. 3. In FIG. 2 and FIG. 3, since the first converter cells 10 have two types of output methods, they are discriminated as 10A and 10B. Hereinafter, if it is necessary to discriminate them, they are referred to as first converter cells 10A and 10B, and in the case of collectively referring to the first converter cells, they are referred to as first converter cells 10.

First, the basic configuration of the first converter cell 10 will be described.

The first converter cell 10 has two legs (first leg, second leg) connected in parallel, and each leg is composed of upper and lower arms formed by connecting semiconductor elements in series. An energy accumulating element (capacitor) is further connected in parallel to the first leg and the second leg connected in parallel. In the first leg, both upper and lower arms are composed of semiconductor switching elements. In the second leg, one of the upper and lower arms is composed of a diode, and the other one is composed of a semiconductor switching element.

At the intermediate points in the two legs, a positive cell output terminal Po and a negative cell output terminal No of the first converter cell 10 are provided.

Next, the configuration of the first converter cell 10A will be specifically described on the basis of FIG. 2(a).

In the first converter cell 10A, a series unit of semiconductor switching element groups 21 and 22 is used as the first leg (LegA). As the second leg (LegB), a diode 23 and a semiconductor switching element group 24 are respectively used in the upper and lower arms, and they are connected in series.

An energy accumulating element (capacitor) 29 is further connected in parallel to the first leg (LegA) and the second leg (LegB) connected in parallel.

At the connection point between the semiconductor switching element groups 21 and 22, a positive cell output terminal Po of the first converter cell 10A is provided. At the connection point between the diode 23 and the semiconductor switching element group 24, a negative cell output terminal No of the first converter cell 10A is provided.

The semiconductor switching element groups 21, 22, and 24 are respectively composed of semiconductor switching elements 21s, 22s, and 24s, and flyback diodes 21d, 22d, and 24d connected in antiparallel thereto.

Next, the configuration of the first converter cell 10B will be specifically described on the basis of FIG. 3(a). For the purpose of discrimination from the first converter cell 10A in FIG. 2(a), the first leg is referred to as LegD, and the second leg is referred to as LegC.

In the first converter cell 10B, a series unit of semiconductor switching element groups 33 and 34 is used as the first leg (LegD). As the second leg (LegC), a semiconductor switching element group 31 and a diode 32 are respectively used in the upper and lower arms, and they are connected in series.

An energy accumulating element (capacitor) 39 is further connected in parallel to the first leg (LegD) and the second leg (LegC) connected in parallel.

At the connection point between the semiconductor switching element group 31 and the diode 32, a positive cell output terminal Po of the first converter cell 10B is provided. At the connection point between the semiconductor switching element groups 33 and 34, a negative cell output terminal No of the first converter cell 10B is provided.

The semiconductor switching element groups 31, 33, and 34 are respectively composed of semiconductor switching elements 31s, 33s, and 34s, and flyback diodes 31d, 33d, and 34d connected in antiparallel thereto.

Hereinafter, the energy accumulating element (capacitor) is referred to as a capacitor.

As the semiconductor switching elements 21s, 22s, 24s, 31s, 33s, and 34s, semiconductor switching elements such as IGBTs (Insulated-Gate Bipolar Transistors), GCTs (Gate Commutated Turn-off thyristors), or MOSFETs (Metal-Oxide-Semiconductor Field-Effect Transistors) are used.

In the case where a diode (body diode) is intrinsic to each semiconductor switching element, the flyback diode may be omitted.

The first converter cell 10 which is a basic component in the present invention is composed of two legs, in which the first leg has upper and lower arms both having semiconductor switching elements, and the second leg has upper and lower arms one of which has a semiconductor switching element and the other one of which has a diode.

The arm composed of a diode only needs to be an arm in which only a diode is used as a semiconductor element through which main current flows.

As described in embodiment 2, in the case of increasing the current capacity of each converter cell, this can be achieved by increasing the number of legs and connecting these legs in parallel.

Next, the switching state and operation mode of the first converter cell 10 will be described.

First, the switching state and operation mode of the first converter cell 10A will be described on the basis of FIG. 2(b).

When the semiconductor switching elements 21s and 24s are ON and the semiconductor switching element 22s is OFF, voltage between both ends of the capacitor 29 is outputted between the output terminals of the first converter cell 10A (mode 1). When the semiconductor switching element 21s is OFF and the semiconductor switching elements 22s and 24s are ON, zero voltage is outputted (mode 2).

When all the semiconductor switching elements 21s, 22s, and 24s are OFF, the first converter cell 10A operates as a diode rectifier in a protection mode (mode 3). Usage of the protection mode will be described later.

The switching state and operation mode of the first converter cell 10B will be described on the basis of FIG. 3(b).

When the semiconductor switching elements 31s and 34s are ON and the semiconductor switching element 33s is OFF, voltage between both ends of the capacitor 39 is outputted between the output terminals of the first converter cell 10B (mode 1). When the semiconductor switching elements 31s and 33s are ON and the semiconductor switching element 34s is OFF, zero voltage is outputted (mode 2).

When all the semiconductor switching elements 31s, 33s, and 34s are OFF, the first converter cell 10B operates as a diode rectifier in a protection mode (mode 3). Usage of the protection mode will be described later.

In the above description, a short-circuit prevention period called a dead time may be provided at the time of switching between the mode 1 and the mode 2. In FIG. 2(a), during the dead time, the semiconductor switching elements 21s and 22s in the first leg (LegA) are both turned off, and in FIG. 3(a), during the dead time, the semiconductor switching elements 33s and 34s in the first leg (LegD) are both turned off.

Although not used in the power conversion device 1 of embodiment 1, a converter cell having a half-bridge configuration is used in embodiment 3. In order to clarify the effect of the first converter cell 10 in the present invention, such a converter cell having a half-bridge configuration with only one leg will be described as a second converter cell 15.

The configuration of the second converter cell 15 will be described on the basis of FIG. 4(a) and FIG. 4(b). Since the second converter cells 15 have two types of output methods, they are discriminated as 15A and 15B. Hereinafter, if it is necessary to discriminate them, they are referred to as second converter cells 15A and 15B, and in the case of collectively referring to the second converter cells, they are referred to as second converter cells 15.

The configuration of the second converter cell 15A will be described on the basis of FIG. 4(a).

In the second converter cell 15A, a series unit of semiconductor switching element groups 81 and 82 is used as a leg. A capacitor 89 is further connected in parallel to the leg.

At the connection point between the semiconductor switching element groups 81 and 82, a positive cell output terminal Po of the second converter cell 15A is provided. At the connection point between the emitter side of the semiconductor switching element group 82 and the capacitor 89, a negative cell output terminal No of the second converter cell 15A is provided.

The semiconductor switching element groups 81 and 82 are respectively composed of semiconductor switching elements 81s and 82s, and flyback diodes 81d and 82d connected in antiparallel thereto.

The configuration of the second converter cell 15B will be described on the basis of FIG. 4(b).

In the second converter cell 15B, a series unit of semiconductor switching element groups 91 and 92 is used as a leg. A capacitor 99 is further connected in parallel to the leg.

At the connection point between the collector side of the semiconductor switching element group 91 and the capacitor 99, a positive cell output terminal Po of the second converter cell 15B is provided. At the connection point between the semiconductor switching element groups 91 and 92, a negative cell output terminal No of the second converter cell 15B is provided.

The semiconductor switching element groups 91 and 92 are respectively composed of semiconductor switching elements 91s and 92s, and flyback diodes 91d and 92d connected in antiparallel thereto.

Next, the switching state and operation mode of the second converter cell 15 will be described on the basis of FIG. 4(c).

When the semiconductor switching element 81s (92s) is ON and the semiconductor switching element 82s (91s) is OFF, voltage between both ends of the capacitor 89 (99) is outputted between the output terminals of the second converter cell 15A (B) (mode 1).

When the semiconductor switching element 81s (92s) is OFF and the semiconductor switching element 82s (91s) is ON, zero voltage is outputted (mode 2).

Next, correspondence between the first converter cell 10 and the second converter cell 15 will be described.

Voltages outputted from the first converter cells 10 in the mode 1 and the mode 2 are equivalent to those outputted from the second converter cells 15 shown in FIG. 4(a) and FIG. 4(b). That is, the mode 1 and the mode 2 in FIG. 2(b) and FIG. 3(b) correspond to the mode 1 and the mode 2 in FIG. 4(c).

Therefore, in the case of using the first converter cells 10 in the present invention shown in FIG. 2(a) and FIG. 3(a), by turning on the semiconductor switching element (24s, 31s) in the leg (LegB, LegC) having the arm in which only a diode is provided and controlling the switching state of the other leg (LegA, LegD) in the same manner as for the half-bridge leg, known technology can be used for operation in a stationary state. For example, "PWM Control and Experiment of Modular Multilevel Converters (MMC)" disclosed in Non-Patent Document 1 can be applied, and therefore the description for the case of stationary operation is omitted.

The greatest difference between the present invention and the power conversion device shown in Non-Patent Document 1 is a protection operation when the DC terminals P and N are short-circuited. The protection operation will be described on the basis of FIG. 5 to FIG. 8.

FIG. 5 is a main circuit configuration in the case of using the second converter cells 15 as the converter cells instead of the first converter cells 10, and shows a short-circuit current route when the DC terminals P and N are short-circuited.

In the circuit as shown in Non-Patent Document 1 which uses the second converter cells 15 instead of the first converter cells 10, when the DC terminals P and N are short-circuited, short-circuit current flows through a short-circuit current route as shown in FIG. 5. The power conversion device detects at least current flowing through the semiconductor switching elements, directly or indirectly by current detection means. When short-circuit determination means determines that short-circuit has occurred on the basis of the detected current, the semiconductor switching elements in the power conversion device are turned off.

However, in the half-bridge configuration as in the second converter cell 15, as shown in FIG. 6, even if the semiconductor switching elements are turned off, since a flyback diode (82d, 91d) exists, the short-circuit current route is maintained, and excessive short-circuit current flows, resulting in breakage of the semiconductor elements.

The case of using the first converter cells 10 of the present invention will be described on the basis of FIG. 7(a) and FIG. 7(b). FIG. 7(a) is an explanation diagram corresponding to the first converter cells 10A, and FIG. 7(b) is an explanation diagram corresponding to the first converter cells 10B.

When the short-circuit determination means (not shown) determines that short-circuit has occurred between the DC terminals on the basis of the detected current from the current detector 11, as shown in FIG. 7(a) and FIG. 7(b), short-circuit current suppressing means (not shown) turns off all the semiconductor switching elements, to form a short-circuit route as in a diode rectifier.

In this case, unless voltage between the cell output terminals exceeds the capacitor voltage, the diode does not conduct current and no short-circuit current route exists. Specifically, in FIG. 7(a) and FIG. 7(b), unless the Po-No voltage exceeds voltage between both ends of the capacitor 29, short-circuit current does not flow. That is, if voltage between the converter cell output terminals is lower than the capacitor voltage, short-circuit current can be suppressed. Since the converter cell output terminals are connected in series, from the overall viewpoint, if voltage between the AC terminals is lower than the sum of the capacitor voltages on the short-circuit current route, short-circuit current can be suppressed.

In the power conversion device of the present invention, for the purpose of maintaining operation in a stationary state, the sum of the capacitor voltages is set to be higher than voltage (for example, in the case of being connected to grid voltage, grid voltage) between the AC terminals, so that short-circuit current does not flow. Even if short-circuit current flows, the capacitors serve to suppress the current, and therefore the short-circuit current can be reduced and finally suppressed.

Here, the capacitor voltage is not the rated use voltage on a catalog, but charge voltage (use voltage) in actual use.

The protection operation of the first converter cell 10 for protection from short-circuit current when the DC terminals P and N are short-circuited will be described on the basis of FIG. 8.

When an operation start command is outputted (S01), in a stationary state, the semiconductor switching element (24s, 31s) in the second leg (LegB, LegC) in which only a diode is provided in either the upper arm or the lower arm is turned on (S02), and a stationary operation is started in a half-bridge state (S03). As described above, in the stationary state, the other first leg (LegA, LegD) can be controlled by control means in known technology.

Next, the current detection means detects current (current in the first converter cell 10, or currents at the DC terminals P and N or currents at the AC terminals U, V, W which allow estimation of the current in the first converter cell 10) (S04). In the power conversion device 1, current at the DC terminal P is detected by the current detector 11 as the current detection means.

Next, the short-circuit determination means determines whether short-circuit has occurred between the DC terminals P and N, on the basis of the detected current (S05).

If the short-circuit determination means determines that short-circuit has occurred between the DC terminals P and N (or determines that merely overcurrent has occurred), the short-circuit current suppressing means turns off all the semiconductor switching elements (21s, 22s, 24s, 31s, 32s, 34s), to shift to the protection mode (S06).

If short-circuit has not occurred, the process returns to the current detection (S04), to periodically repeat the current detection (S04) and the short-circuit determination (S05).

After the shift to the protection mode, restart is awaited (S07).

Even in the case of using a full-bridge configuration in which semiconductor switching elements are provided in all the arms, an effect of suppressing short-circuit current can be obtained as disclosed in Patent Document 1. However, the number of semiconductor switching elements increases, so that the size of the device is increased and a failure rate of the elements increases, thus reducing the reliability.

In the present invention, the semiconductor switching element in the second leg having the arm in which a diode is provided is constantly ON in a stationary state, and thus the control circuit can be simplified. That is, the present invention can achieve a power conversion device with a small size and high reliability.

In the present invention, in the diode (23, 32) used in the second leg (LegB, LegC) of the first converter cell 10, current flows during only a short period in the protection mode. Therefore, the rated current of the diode (23, 32) can be set to be smaller than the rated current of the semiconductor switching element through which current flows constantly or the rated current of the flyback diode connected in antiparallel thereto. As a method for reducing the rated current, the semiconductor chip area may be reduced, for example.

In embodiment 1, FIG. 1 has been shown as the main circuit configuration of the power conversion device 1. However, the locations and the shapes of the reactors are not limited.

The main circuit configurations of other examples of the power conversion device of embodiment 1 will be described on the basis of FIG. 9 to FIG. 11.

In a power conversion device 2 in FIG. 9, the reactors are coupled to obtain a reactor 301. In the power conversion device 2, current detectors (12U, 12V, 12W) as current detection means for detecting occurrence of short-circuit between the DC terminals P and N are provided on the AC terminal side.

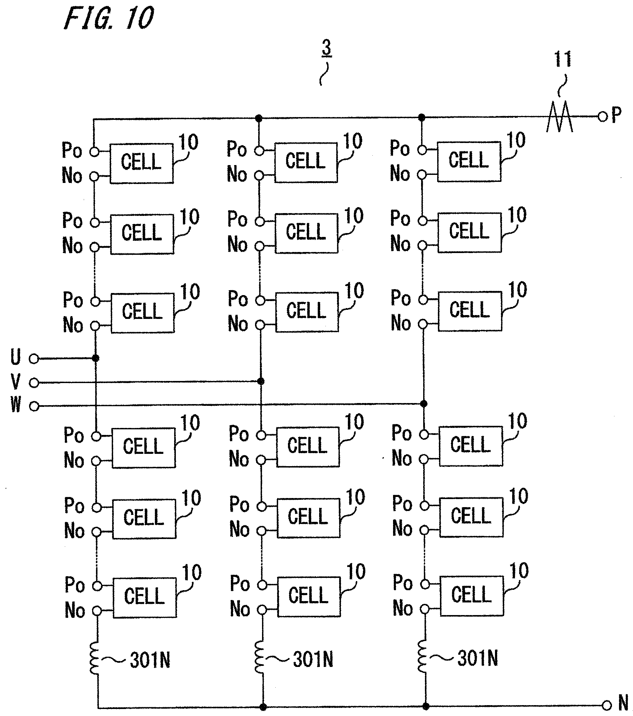

In a power conversion device 3 in FIG. 10, reactors are connected to only the phase arms on one polarity side. In the power conversion device 3, reactors 301N are connected on only the negative side. However, reactors 301P may be connected on only the positive side.

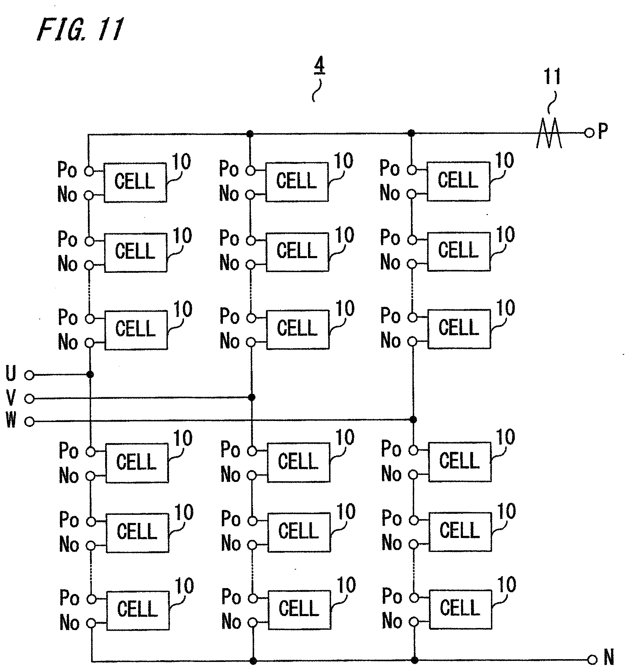

In a power conversion device 4 in FIG. 11, a wiring inductance is utilized. Owing to increase in the switching frequency, the same effect can be obtained also in the circuit to which no reactor is connected.

As described above, the power conversion device of embodiment 1 has phase arms each having a plurality of converter cells connected in series, between AC terminals and DC terminals, and each converter cell is a first converter cell composed of: an energy accumulating element; a first leg having upper and lower arms both having semiconductor switching elements; and a second leg having upper and lower arms one of which has a diode and the other one of which has a semiconductor switching element. Thus, the power conversion device of embodiment 1 can suppress overcurrent caused by short-circuit between the DC terminals, and can achieve size reduction and cost reduction of the device. Since overcurrent can be suppressed, an effect of improving the durability and saving energy is obtained.

Instead of the first converter cell 10 of the present invention shown in embodiment 1, even in the case of using a converter cell having a full-bridge configuration in which semiconductor switching elements are provided in all the arms of the first leg and the second leg, an effect of suppressing short-circuit current can be obtained. However, in the case of using the converter cell having a full-bridge configuration the effect of the present invention cannot be satisfied in reliability and size reduction. In the first converter cell 10 of the present invention, one of the upper and lower arms of the second leg does not have a semiconductor switching element. Therefore, it is not necessary to generate a gate signal for one arm of the second leg, a control circuit and a control line can be omitted, and the power conversion device can be downsized. Since a failure rate of a diode is lower than that of a semiconductor switching element, a power conversion device with high reliability can be achieved.

### Embodiment 2

In a power conversion device of embodiment 2, for large current capacity application, the number of semiconductor elements in each leg of the first converter cell is increased as compared to that in embodiment 1, and these semiconductor elements are connected in parallel.

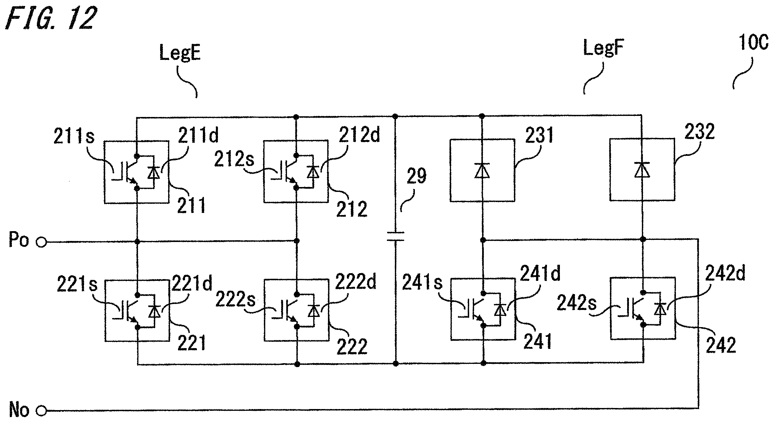

Hereinafter, the configuration and operation of the power conversion device of embodiment 2 will be described on the basis of FIG. 12 to FIG. 15 which are other circuit diagrams of the first converter cells.

In embodiment 1, as shown in FIG. 2 and FIG. 3, each leg of the first converter cell 10 has a one-parallel configuration of semiconductor elements. Embodiment 2 assumes a power conversion device having a larger capacity than the current capacity assumed in embodiment 1.

The entire configuration of the power conversion device in embodiment 2 is the same as that in FIG. 1, FIG. 9, FIG. 10, or FIG. 11 described in embodiment 1, except for the configuration of the first converter cell 10. The only difference from embodiment 1 is the configuration of the first converter cell 10.

First, a first converter cell 10C corresponding to the first converter cell 10A (FIG. 2) will be described on the basis of FIG. 12.

The first converter cell 10C has a parallel configuration of a first leg (LegE), a second leg (LegF), and the capacitor 29.

In the first leg (LegE), a parallel unit of semiconductor switching element groups 211 and 212 in an upper arm and a parallel unit of semiconductor switching element groups 221 and 222 in a lower arm are connected in series.

In the second leg (LegF), a parallel unit of diodes 231 and 232 in an upper arm and a parallel unit of semiconductor switching element groups 241 and 242 in a lower arm are connected in series.

At the connection point between the upper arm and the lower arm of the first leg (LegE), a positive cell output terminal Po of the first converter cell 10C is provided. At the connection point between the upper arm and the lower arm of the second leg (LegF), a negative cell output terminal No of the first converter cell 10C is provided.

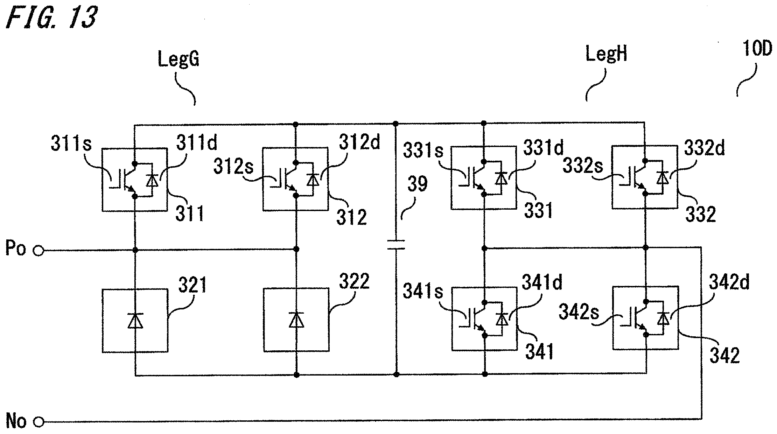

Next, a first converter cell 10D corresponding to the first converter cell 10B (FIG. 3) will be described on the basis of FIG. 13.

The first converter cell 10D has a parallel configuration of a first leg (LegH), a second leg (LegG), and the capacitor 39.

In the first leg (LegH), a parallel unit of semiconductor switching element groups 331 and 332 in an upper arm, and a parallel unit of semiconductor switching element groups 341 and 342 in a lower arm are connected in series.

In the second leg (LegG), a parallel unit of semiconductor switching element groups 311 and 312 in an upper arm, and a parallel unit of diodes 321 and 322 in a lower arm are connected in series.

At the connection point between the upper arm and the lower arm of the second leg (LegG), a positive cell output terminal Po of the first converter cell 10D is provided. At the connection point between the upper arm and the lower arm of the first leg (LegH), a negative cell output terminal No of the first converter cell 10D is provided.

Next, operations of the first converter cell 10C (FIG. 12) and the first converter cell 10D (FIG. 13) will be described.

In the first converter cells 10C and 10D, the semiconductor switching elements connected in parallel are controlled to be ON or OFF simultaneously, whereby the current capacity can be increased. Also in this case of connecting the semiconductor switching elements in parallel, the ON/OFF control for the semiconductor switching elements is the same as the control for the first converter cells 10A and 10B described in embodiment 1, except that the semiconductor switching elements are connected in parallel.

In the first converter cell 10C (FIG. 12), the diodes 231 and 232 composing the upper arm of the second leg (LegF) are connected in parallel. In the first converter cell 10D (FIG. 13), the diodes 321 and 322 composing the lower arm of the second leg (LegG) are connected in parallel.

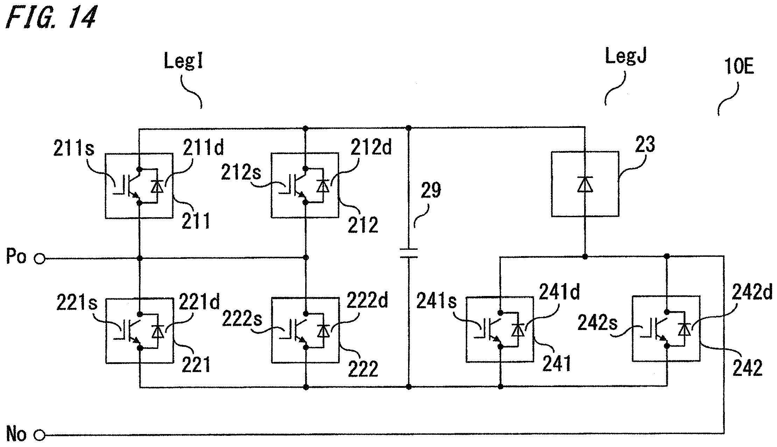

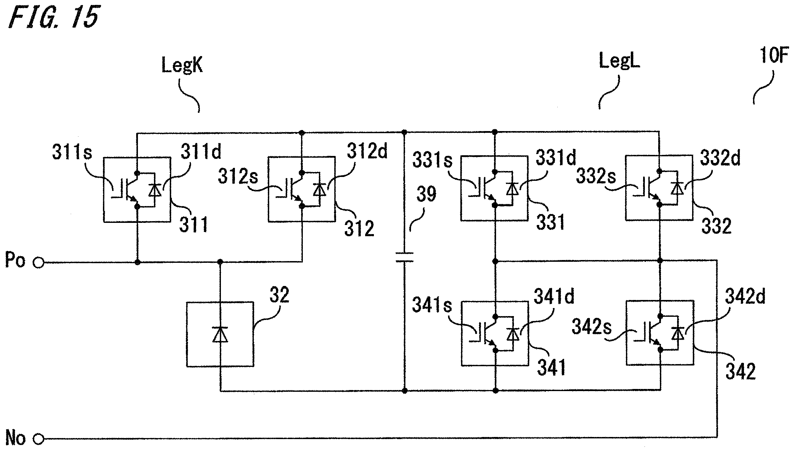

However, in these diodes, as described in embodiment 1, current flows during only a short period at the moment when short-circuit occurs between the DC terminals and shifting to the protection mode is performed. Therefore, in the first converter cells 10C and 10D, even if the diodes (231 and 232, or 321 and 322) connected in parallel in the second leg (LegF, LegG) are replaced with one element, increase in heat generation or in loss is almost negligible. FIG. 14 and FIG. 15 show circuit diagrams in the case where these diodes are replaced with one element.

In FIG. 14, the diodes 231 and 232 connected in parallel in the second leg of the first converter cell 10C are replaced with one element, i.e., a diode 23. For the purpose of discrimination from the first converter cell 10C, this first converter cell is referred to as a first converter cell 10E, and the first leg and the second leg are referred to as LegI and LegJ, respectively.

In FIG. 15, the diodes 321 and 322 connected in parallel in the second leg of the first converter cell 10D are replaced with one element, i.e., a diode 32. For the purpose of discrimination from the first converter cell 10D, this first converter cell is referred to as a first converter cell 10F, and the first leg and the second leg are referred to as LegL and LegK, respectively.

The first converter cells 10E and 10F are the same as the first converter cells 10C and 10D except that the diodes connected in parallel in each second leg are replaced with one element, and therefore the description thereof is omitted.

In the description in embodiment 2, the number of semiconductor switching elements connected in parallel in the first converter cell 10 is two (two parallel), but a two-or-more-parallel configuration may be employed. In this case, the number of diodes provided in the second leg may not necessarily be the number of the semiconductor switching elements connected in parallel, or one. For example, three semiconductor switching elements may be connected in parallel, and two diodes may be connected in parallel.

Instead of the first converter cell 10 of the present invention shown in embodiment 2, even in the case of using a converter cell having a full-bridge configuration in which semiconductor switching elements are provided in all the arms of the first leg and the second leg, an effect of suppressing short-circuit current can be obtained. However, in the case of using the converter cell having a full-bridge configuration the effect of the present invention cannot be satisfied in reliability and size reduction. In the first converter cell 10 of the present invention, one of the upper and lower arms of the second leg does not have a semiconductor switching element. Therefore, it is not necessary to generate a gate signal for one arm of the second leg, a control circuit and a control line can be omitted, and the power conversion device can be downsized. Since a failure rate of a diode is lower than that of a semiconductor switching element, a power conversion device with high reliability can be achieved.

Using the power conversion device of embodiment 2 allows increase in the current capacity of the power conversion device and decrease in the number of diodes in the second leg of each first converter cell 10. Thus, the power conversion device can be downsized.

As described above, in the power conversion device of embodiment 2, for large current capacity application, the number of semiconductor elements in each leg of the first converter cell is increased as compared to that in embodiment 1, and these semiconductor elements are connected in parallel. Therefore, the power conversion device of embodiment 2 can suppress overcurrent caused by short-circuit between the DC terminals, and can achieve size reduction and cost reduction of the device. Further, the current capacity of the power conversion device can be increased.

### Embodiment 3

In a power conversion device of embodiment 3, a necessary number of first converter cells 10 for protection from short-circuit between the DC terminals are provided, and the other converter cells are the second converter cells 15 having a half-bridge configuration with only one leg.

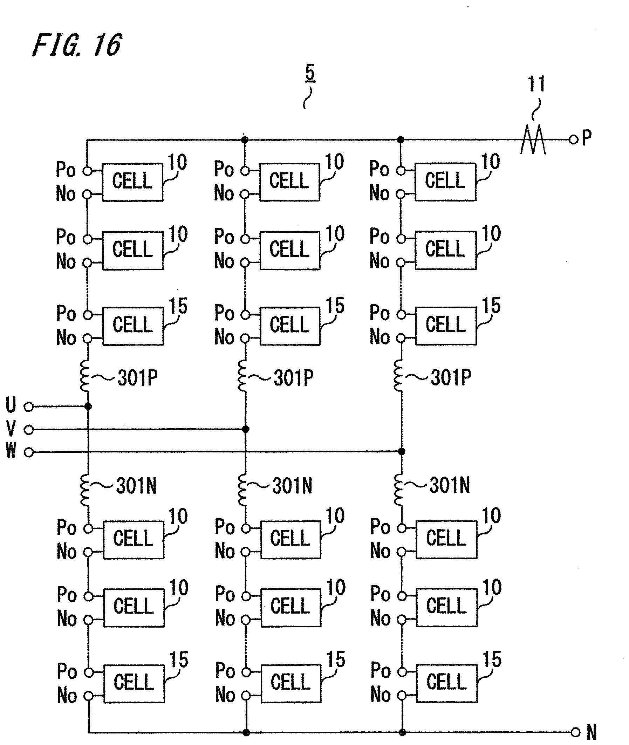

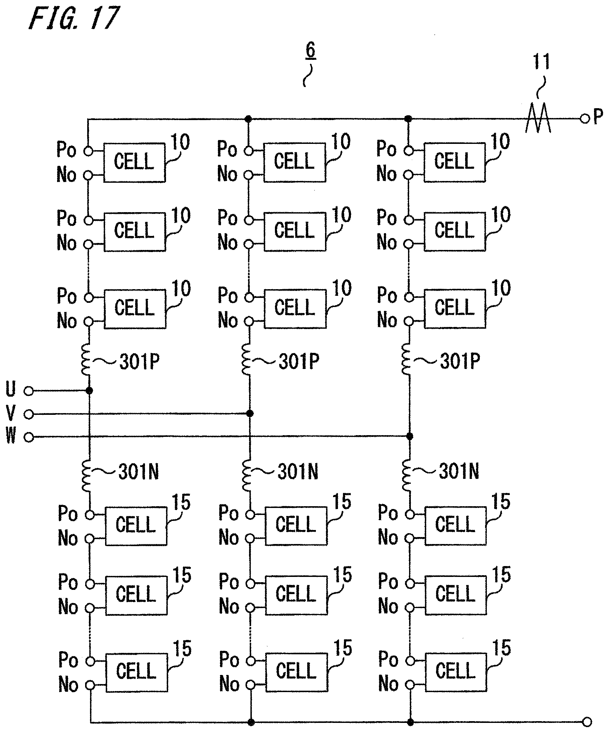

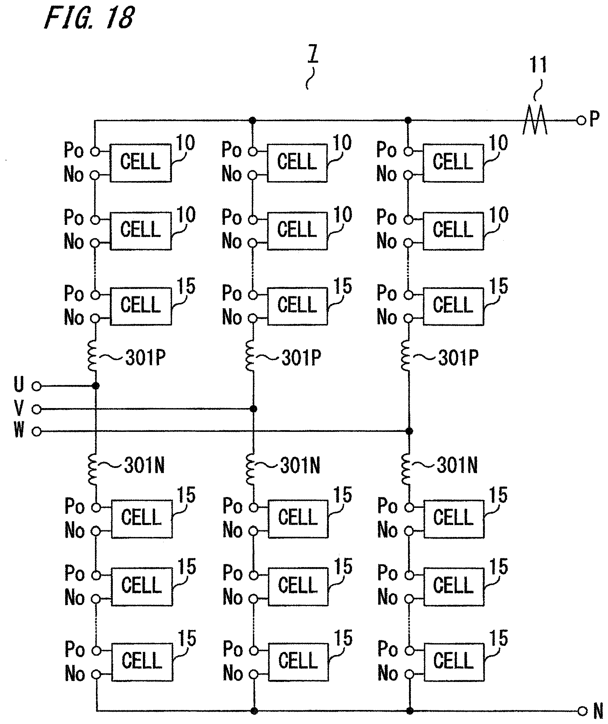

Hereinafter, the configuration and operation of the power conversion device of embodiment 3 will be described on the basis of FIG. 16 which is a main circuit configuration diagram thereof, and FIG. 17 and FIG. 18 which are main circuit configuration diagrams of other examples.

In embodiments 1 and 2, all the converter cells in the power conversion device are the first converter cells 10. In embodiment 3, the converter cells include both the first converter cells 10 and the second converter cells 15.

In a stationary state, the first converter cell 10 and the second converter cell 15 output both DC voltage and AC voltage as described in Non-Patent Document 1. Therefore, the DC voltage (capacitor voltage) in each of the first converter cell 10 and the second converter cell 15 includes voltage output between the DC terminals in addition to voltage applied between the AC terminals.

Since the condition for the diode to conduct current when the DC terminals are short-circuited is determined depending on the condition of voltage applied between the AC terminals, the above means that there is a margin corresponding to the DC output. Therefore, not all the converter cells need to be the first converter cell 10, and the short-circuit current can be suppressed by connecting a necessary number of first converter cells 10.

For example, since the output ratio is normally designed so as to satisfy the relationship: DC voltage output ≧ AC voltage output, the number of first converter cells 10 may be 1/2 of the number of all the converter cells.

Next, the configuration of the power conversion device of embodiment 3 will be described on the basis of FIG. 16 to FIG. 18.

In a power conversion device 5 in FIG. 16, some of the converter cells in each phase arm between the AC terminals U, V, W and the DC terminals P and N are the first converter cells 10, and the other converter cells are the second converter cells 15.

In a power conversion device 6 in FIG. 17, all the converter cells in the phase arms on one polarity side are the first converter cells 10, and all the converter cells in the phase arms on the other polarity side are the second converter cells 15.

In a power conversion device 7 in FIG. 18, some of the converter cells in the phase arms on one polarity side are the first converter cells 10, and the other converter cells are the second converter cells 15.

In order to suppress short-circuit current, the sum of the capacitor voltages of the first converter cells 10 on the short-circuit current route only needs to be higher than voltage between the AC terminals. That is, it is only necessary to provide, on the short-circuit current route, the converter cells 10 the number of which is larger than the cell number calculated as "the maximum value of voltage between the AC terminals" / "the capacitor voltage of the converter cell 10".

Here, the capacitor voltage is not the rated use voltage on a catalog, but charge voltage (use voltage) in actual use.

Also in embodiment 3, the positions and the coupling of the reactors are not limited, and are not restricted within FIG. 16 to FIG. 18.

As described above, in the power conversion device of embodiment 3, a necessary number of first converter cells 10 for protection from short-circuit between the DC terminals are provided, and the other converter cells are the second converter cells 15 having a half-bridge configuration. Therefore, the power conversion device of embodiment 3 can suppress overcurrent caused by short-circuit between the DC terminals, and can achieve size reduction and cost reduction of the device. In addition, since the number of the first converter cells is decreased, simplification of the configuration, improvement in reliability, and cost reduction can be further promoted.

Instead of the first converter cell 10 of the present invention shown in embodiment 3, even in the case of using a converter cell having a full-bridge configuration in which semiconductor switching elements are provided in all the arms of the first leg and the second leg, an effect of suppressing short-circuit current can be obtained. However, in the case of using the converter cell having a full-bridge configuration the effect of the present invention cannot be satisfied in reliability and size reduction. In the first converter cell 10 of the present invention, one of the upper and lower arms of the second leg does not have a semiconductor switching element. Therefore, it is not necessary to generate a gate signal for one arm of the second leg, a control circuit and a control line can be omitted, and the power conversion device can be downsized. Since a failure rate of a diode is lower than that of a semiconductor switching element, a power conversion device with high reliability can be achieved.

### Embodiment 4

In embodiment 4, although a circuit diagram is not shown, all or some of the semiconductor elements in the converter cells 10 are made of wide bandgap semiconductors. Silicon is often used as the material for the semiconductors. Examples of materials of wide bandgap semiconductors include silicon carbide, gallium-nitride-based material, and diamond.

Using wide bandgap semiconductors allows increase in the withstand voltage of the semiconductor elements, leading to decrease in the number of the converter cells connected in series. Further, wide bandgap semiconductors allow reduction in switching loss.

Therefore, for example, wide bandgap semiconductors may be used for only the semiconductor switching elements that perform switching operation in a stationary state and the flyback diodes connected in antiparallel thereto.

Increasing the chip area of the wide bandgap semiconductor allows reduction in conduction loss. By utilizing this and using wide bandgap semiconductors for only the semiconductor switching elements that are constantly turned on in a stationary state, conduction loss can be reduced.

If wide bandgap semiconductors are used for all the semiconductor elements, both of the above effects can be obtained.

Thus, in the power conversion device of embodiment 4, since loss occurring in the semiconductor elements can be reduced, an energy saving effect can be expected, and in addition, since heat dissipation is facilitated, size reduction and cost reduction of the power conversion device can be achieved.

### INDUSTRIAL APPLICABILITY

The present invention relates to conversion from AC power to DC power or conversion from DC power to AC power, and is applicable to wide variety of power conversion devices.

## Claims

1. A power conversion device (1) comprising phase arms provided between AC terminals (U, V, W) and DC terminals (P, N) and each having one converter cell (10) or two or more converter cells (10) connected in series, each converter cell (10) including an energy accumulating element (29) and upper and lower arms having semiconductor switching elements (21s, 22s, 24s), wherein
at least one of the converter cells (10) is a first converter cell (10A) in which an energy accumulating element (29), a first leg (LegA), and a second leg (LegB) are connected in parallel, the first leg (LegA) having upper and lower arms both having semiconductor switching elements (21s, 22s), the second leg (LegB) having upper and lower arms one of which has only a diode (23) as a semiconductor element through which main current flows, and the other one of which has a semiconductor switching element (24s), and
the number of the first converter cells (10A) connected on a short-circuit current route occurring when the DC terminals (P, N) are short-circuited is greater than a number obtained by dividing a maximum value of rated voltage between the AC terminals (U, V, W) by use voltage of the energy accumulating element (29).

2. The power conversion device according to claim 1, wherein the first leg (LegE) and the second leg (LegF) of the first converter cell (10C) are respectively configured with a plurality of semiconductor switching elements (211s, 212s, 221s, 222s, 241s, 242s) connected in parallel and a plurality of diodes (231, 232) connected in parallel.

3. The power conversion device according to claim 2, wherein the number of the diodes (23) connected in parallel in the second leg (LegJ) of the first converter cell (10E) is less than the number of the semiconductor switching elements (211s, 212s, 221s, 222s, 241s, 242s) connected in parallel.

4. The power conversion device (5) according to any one of claims 1 to 3, wherein at least one of the converter cells other than the first converter cell (10) is a second converter cell (15) having a half-bridge configuration in which an energy accumulating element (89) and one leg including upper and lower arms both having semiconductor switching elements (81s, 82s) are connected in parallel.

5. The power conversion device (6) according to any one of claims 1 to 3, wherein the phase arm that does not have the first converter cell (10) is provided between at least one of the AC terminals (U, V, W) and at least one of the DC terminals (P, N).

6. The power conversion device (6) according to claim 4, wherein the phase arm that does not have the first converter cell (10) is provided between at least one of the AC terminals (U, V, W) and at least one of the DC terminals (P, N).

7. The power conversion device (1) according to any one of claims 1 to 3, further comprising:
current detection means for detecting current flowing through the converter cells (10); and
short-circuit determination means for determining occurrence of short-circuit between the DC terminals (P, N) on the basis of the detected current, wherein
the semiconductor switching element (24s) in the second leg (LegB) of the first converter cell (10A) is turned on in a stationary operation.

8. The power conversion device (1) according to claim 7, further comprising short-circuit current suppressing means for suppressing short-circuit current when the DC terminals (P, N) are short-circuited.

9. The power conversion device (1) according to claim 8, wherein the short-circuit current suppressing means turns off all the semiconductor switching elements (21s, 22s, 24s) of the first converter cell (10A).

10. The power conversion device (1) according to claim 7, wherein, as the current detection means, a current detector (11) is provided at the DC terminals (P, N).

11. The power conversion device (2) according to claim 7, wherein, as the current detection means, a current detector (12U, 12V, 12W) is provided at the AC terminals (U, V, W).

12. The power conversion device (1) according to any one of claims 1 to 3, wherein
rated current of the diode (23) in the second leg (LegB) of the first converter cell (10A) is smaller than rated current of the semiconductor switching element (21s, 22s, 24s).

## Patentansprüche

1. Leistungsumsetzungseinrichtung (1), umfassend zwischen AC-Kontakten (U, V, W) und DC-Kontakten (P, N) bereitgestellte Phasenarme, von denen jeder eine Umsetzerzelle (10) oder zwei oder mehr in Reihe geschaltete Umsetzerzellen (10) aufweist, wobei jede Umsetzerzelle (10) ein Energieakkumlatorelement (29) und einen oberen und einen unteren Arm mit Halbleiterschaltelementen (21s, 22s, 24s) aufweist, wobei
mindestens eine der Umsetzerzellen (10) eine erste Umsetzerzelle (10A) ist, bei welcher ein Energieakkumulatorelement (29), ein erster Zweig (LegA) und ein zweiter Zweig (LegB) parallel geschaltet sind, wobei der erste Zweig (LegA) einen oberen und einen unteren Arm jeweils mit Halbleiterschaltelementen (21s, 22s) aufweist, wobei der zweite Zweig (LegB) einen oberen und einen unteren Arm aufweist, von denen einer nur eine Diode (23) als Halbleiterelement aufweist, durch welches ein Hauptstrom fließt, und der andere ein Halbleiterschaltelement (24s) aufweist, und
die Anzahl der ersten Umsetzerzellen (10A), die in einen Kurzschlussstromleitweg geschaltet sind, der auftritt, wenn die DC-Kontakte (P, N) kurzgeschlossen sind, größer ist als eine Anzahl, die sich durch Unterteilen eines Maximalwerts einer Nennspannung zwischen den AC-Kontakten (U, V, W) durch eine Nutzungsspannung des Energieakkumulatorelements (29) ergibt.

2. Leistungsumsetzungseinrichtung nach Anspruch 1, wobei der erste Zweig (LegE) und der zweite Zweig (LegF) der ersten Umsetzerzelle (10C) jeweils mit mehreren parallel geschalteten Halbleiterschaltelementen (211s, 212s, 221s, 222s, 241s, 242s) und mehreren parallel geschalteten Dioden (231, 232) eingerichtet sind.

3. Leistungsumsetzungseinrichtung nach Anspruch 2, wobei die Anzahl der parallel geschalteten Dioden (23) in dem zweiten Zweig (LegJ) der ersten Umsetzerzelle (10E) geringer ist als die Anzahl der parallel geschalteten Halbleiterschaltelemente (211s, 212s, 221s, 222s, 241s, 242s).

4. Leistungsumsetzungseinrichtung (5) nach einem der Ansprüche 1 bis 3, wobei mindestens eine von der ersten Umsetzerzelle (10) verschiedene der Umsetzerzellen eine zweite Umsetzerzelle (15) mit einer Halbbrückenkonfiguration ist, wobei ein Energieakkumulatorelement (89) und ein Zweig mit einem oberen und einem unteren Arm, die jeweils Halbleiterschaltelemente (81s, 82s) aufweisen, parallel geschaltet sind.

5. Leistungsumsetzungseinrichtung (6) nach einem der Ansprüche 1 bis 3, wobei der Phasenarm, der die erste Umsetzerzelle (10) nicht aufweist, zwischen mindestens einem der AC-Kontakte (U, V, W) und mindestens einem der DC-Kontakte (P, N) bereitgestellt ist.

6. Leistungsumsetzungseinrichtung (6) nach Anspruch 4, wobei der Phasenarm, der die erste Umsetzerzelle (10) nicht aufweist, zwischen mindestens einem der AC-Kontakte (U, V, W) und mindestens einem der DC-Kontakte (P, N) bereitgestellt ist.

7. Leitungsumsetzungseinrichtung (1) nach einem der Ansprüche 1 bis 3, ferner umfassend:
ein Stromerfassungsmittel zum Erfassen eines Stroms, der durch die Umsetzerzellen (10) fließt; und
ein Kurzschlussbestimmungsmittel zum Bestimmen eines Auftretens eines Kurzschlusses zwischen den DC-Kontakten (P, N) basierend auf dem erfassten Strom, wobei
das Halbleiterschaltelement (24s) in dem zweiten Zweig (LegB) der ersten Umsetzerzelle (10A) in einem stationären Betriebszustand eingeschaltet ist.

8. Leistungsumsetzungseinrichtung (1) nach Anspruch 7, ferner umfassend ein Kurzschlussstrom-Unterdrückungsmittel zum Unterdrücken eines Kurzschlussstroms, wenn die DC-Kontakte (P, N) kurzgeschlossen sind.

9. Leistungsumsetzungseinrichtung (1) nach Anspruch 8, wobei das Kurzschlussstrom-Unterdrückungsmittel alle die Halbleiterschaltelemente (21s, 22s, 24s) der ersten Umsetzerzelle (10A) ausschaltet.

10. Leistungsumsetzungseinrichtung (1) nach Anspruch 7, wobei als das Stromerfassungsmittel ein Stromdetektor (11) an den DC-Kontakten (P, N) bereitgestellt ist.

11. Leistungsumsetzungseinrichtung (2) nach Anspruch 7, wobei als das Stromerfassungsmittel ein Stromdetektor (12U, 12V, 12W) an den AC-Kontakten (U, V, W) bereitgestellt ist.

12. Leistungsumsetzungseinrichtung (1) nach einem der Ansprüche 1 bis 3, wobei ein Nennstrom der Diode (23) in dem zweiten Zweig (LegB) der ersten Umsetzerzelle (10A) kleiner als ein Nennstrom des Halbleiterschaltelements (21s, 22s, 24s) ist.

## Revendications

1. Dispositif de conversion de puissance (1) comprenant des bras de phase prévus entre des bornes CA (U,V,W) et des bornes CC (P,N) et ayant chacun une cellule de convertisseur (10) ou deux ou plus cellules de convertisseur (10) connectées en série, chaque cellule de convertisseur (10) incluant un élément d'accumulation d'énergie (29) et des bras supérieurs et inférieurs ayant des éléments de commutation à semi-conducteurs (21s,22s,24s), dans lequel au moins une des cellules de convertisseur (10) et une première cellule de convertisseurs (10A) dans laquelle un élément d'accumulation d'énergie (29), une première jambe (LegA) et une seconde jambe (LegB) sont connectés en parallèle, la première jambe (LegA) ayant des bras supérieurs et inférieurs ayant tous deux des éléments de commutation à semi-conducteurs (21s,22s), la seconde jambe (LegB) ayant des bras supérieurs et inférieurs dont un possède seulement une diode (23) comme un élément semi-conducteur à travers lequel le courant principal circule et dont l'autre possède un élément de commutation à semi-conducteurs (24s) et le nombre des premières cellules de convertisseurs (10A) connectées sur une route actuelle de court-circuit se produisant lorsque les bornes CC (P,N) sont court-circuités est plus grand qu'un nombre obtenu en divisant une valeur maximale de tension nominale entre les bornes CA (U,V,W) par l'utilisation de la tension de l'élément d'accumulation d'énergie (29).

2. Dispositif de conversion de puissance selon la revendication 1, dans lequel la première jambe (LegE) et la seconde jambe (LegF) de la première cellule de convertisseur sont respectivement configurées avec une pluralité d'éléments de commutation à semi-conducteurs (211s,212s,221s,222s,241s,242s) connectés en parallèle et une pluralité de diodes (231,232) connectées en parallèle.

3. Dispositif de conversion de puissance selon la revendication 2, dans lequel le nombre des diodes (23) connectées en parallèle dans la seconde jambe (LegJ) de la première cellule de convertisseur (10E) est inférieur au nombre des éléments de commutation à semi-conducteurs connectés en parallèle (211s,212s,221s,222s,241s,242s).

4. Dispositif de conversion de puissance (5) selon une quelconque des revendications 1 à 3, dans lequel au moins une des cellules de convertisseur autre que la première cellule de convertisseur (10) et une seconde cellule de convertisseur (15) ayant une configuration en demi-pont dans laquelle un élément d'accumulation d'énergie (89) et une jambe incluant un bras supérieur et inférieur ayant tous deux des éléments de commutation à semi-conducteurs (81s,82s) sont connectés en parallèle.

5. Dispositif de conversion de puissance (6) selon une quelconque des revendications 1 à 3, dans lequel le bras de phase qui ne possède pas la cellule de convertisseur (10) est prévu entre au moins une des bornes CA (U,V,W) et au moins une des bornes CC (P,N).

6. Dispositif de conversion de puissance (6) selon la revendication 4, dans lequel le bras de phase qui ne possède pas la première cellule de convertisseur (10) est prévu entre au moins une des bornes CA (U,V,W) et au moins une des bornes CC (P,N).

7. Dispositif de conversion de puissance (1) selon une quelconque des revendications 1 à 3, comprenant en outre :
un moyen de détection de courant pour détecter un courant circulant à travers les cellules de convertisseur (10) ; et
un moyen de détermination de court-circuit pour déterminer l'occurrence d'un court-circuit entre les bornes CC (P,N) sur la base du courant détecté, dans lequel
l'élément de commutation à semi-conducteurs (24s) dans la seconde jambe (LegB) de la première cellule de convertisseur (10A) est mis sous tension dans un fonctionnement stationnaire.

8. Dispositif de conversion de puissance (1) selon la revendication 7, comprenant en outre un moyen de suppression de courant de court-circuit pour supprimer un courant de court-circuit lorsque les bornes CC (P,N) sont court-circuitées.

9. Dispositif de conversion de puissance (1) selon la revendication 8, dans lequel le moyen de suppression de courant de court-circuit met hors tension tous les éléments de commutation à semi-conducteurs (21s,22s,24s) de la première cellule de convertisseur (10A).

10. Dispositif de conversion de puissance (1) selon la revendication 7, dans lequel, en tant que le moyen de détection de courant, un détecteur de courant (11) est prévu au niveau des bornes CC (P,N).

11. Dispositif de conversion de puissance (2) selon la revendication 7, dans lequel, en tant que le moyen de détection de courant, un détecteur de courant (12U,12V,12W) est prévu au niveau des bornes CA (U,V,W).

12. Dispositif de conversion de puissance 1, selon une quelconque des revendications 1 à 3, dans lequel le courant nominal de la diode (23) dans la seconde jambe (LegB) de la première cellule de convertisseur (10A) est plus petit que le courant nominal de l'élément de commutation à semi-conducteurs (21s,22s,24s).
